Europäisches Patentamt

European Patent Office

Office européen des brevets

(11) Veröffentlichungsnummer: **0 212 153**
**B1**

(12) **EUROPÄISCHE PATENTSCHRIFT**

(45) Veröffentlichungstag der Patentschrift:
14.09.88

(21) Anmeldenummer: 86108814.4

(22) Anmeldetag: 28.06.86

(51) Int. Cl.⁴: **C 08 G 61/08**

(54) **Niedermolekulare Polyalkenamere und deren Verwendung.**

(30) Priorität: **22.08.85 DE 3529995**

(43) Veröffentlichungstag der Anmeldung:
**04.03.87 Patentblatt 87/10**

(45) Bekanntmachung des Hinweises auf die Patenterteilung:
**14.09.88 Patentblatt 88/37**

(84) Benannte Vertragsstaaten:
**BE DE FR GB IT NL**

(56) Entgegenhaltungen:
**DE - A - 2 619 197**
**US - A - 3 932 373**

(73) Patentinhaber: **HÜLS AKTIENGESELLSCHAFT, - RSP Patente / PB 15 - Postfach 13 20, D-4370 Marl 1 (DE)**

(72) Erfinder: **Zerpner, Dieter, Dr., Neulandstrasse 110, D-4370 Marl (DE)**
Erfinder: **Streck, Roland, Dr., Leverkusener Strasse 12, D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, niedermolekulare Polymerisate von 1,3-Dienen, vornehmlich Polybutadiene, bei denen die Doppelbindungen überwiegend cis-1,4-Konfiguration aufweisen, als Bindemittel in luft- und ofentrocknenden Anstrichmitteln zu verwenden (DE-PS 1 186 631 und DE-AS 1 494 417).

Aus der DE-AS 1 174 071 ist es weiterhin bekannt, isolierte Doppelbindungen in Polybutadienen zu konjugierten Doppelbindungen umzulagern. Dadurch erhält man, ausgehend von den verhältnismässig reaktionsträgen Polybutadienen mit weitgehend isolierten Doppelbindungen, sehr reaktionsfähige Polybutadiene, die im niedermolekularen Bereich u.a. wiederum zur Herstellung selbsttrocknender Lacke verwendet werden können.

Neben der Isomerisierung von isolierten zu konjugierten Doppelbindungen in vorzugsweise niedermolekularen Polybutadienen, wie sie beispielsweise in der DE-AS 1 174 071, der DE-PS 2 342 885, den DE-OSS 2 924 548, 2 924 598 und 2 924 577 sowie der EP-A-0 086 894 beschrieben wird, ist als weiterer Weg zur Herstellung von polymeren Verbindungen mit konjugierten Doppelbindungen die Copolymerisation von 1,3-Dienen mit Acetylen bekannt [J. Furukawa et al., Journ. Polym. Sci., Polym. Chem. Ed., Vol. 14, 1213-19 (1976)].

Alle diese Produkte des Standes der Technik erreichen jedoch beim Einsatz als Bindemittel in Anstrichmitteln nicht die lufttrocknenden Eigenschaften des besonders schnell trocknenden chinesischen Holzöls (Tungöls).

Umso überraschender was es daher, dass die in den Patentansprüchen 1 bis 4 beschriebenen niedermolekularen Polyalkenameren, besonders nach einer Isomerisierung, bei der Verwendung als Bindemittel in Anstrichmitteln, bezüglich Staub- und Durchtrocknung der damit hergestellten Überzüge das Niveau des chinesischen Holzöls erreichen oder gar übertreffen.

Kennzeichnendes Merkmal der erfindungsgemässen Polyalkenameren mit einem mittleren Molekulargewicht ($M_n$) von 500 bis 6000 ist die Zusammensetzung des bei der ringöffnenden Polymerisation [Einzelheiten siehe die Monographie «Olefin Metathesis» von K.J. Ivin, Academie Press (1983-)] einsetzbaren Cyclooctadienisomerengemisches, das neben cis,cis-Cyclooctadien-(1,5) maximal 20 Gew.-% cis,cis-Cyclooctadien-(1,3) und 10 bis 99 Gew.-% cis,cis-Cyclooctadien-(1,4) enthält.

Im allgemeinen geht man von Cyclooctadienisomerengemischen aus, die 0,01 bis 20 Gew.-% cis,-cis-Cyclooctadien-(1,3), 10 bis 99 Gew.-% cis,cis-Cyclooctadien-(1,4) und 0,99 bis 89,99 Gew.-% cis,cis-Cyclooctadien-(1,5) enthalten. Bevorzugt sind Isomerengemische mit 0,1 bis 10 Gew.-% cis,cis-Cyclooctadien-(1,3), 20 bis 99 Gew.-% cis,cis-Cyclooctadien-(1,4) und 0,9 bis 79,9 Gew.-% cis,cis-Cyclooctadien-(1,5). Besonders bevorzugt sind Isomerengemische mit 30 bis 60 Gew.-% cis,cis-Cyclooctadien-(1,4) und bis zu 10 Gew.-% cis,cis-Cyclooctadien-(1,3).

Cis,cis-Cyclooctadien-(1,5) kann bekanntlich nach verschiedenen Verfahren mit hoher Selektivität und in hohen Ausbeuten durch Dimerisation von Butadien-(1,3) erhalten werden (DE-PSS 1 140 569, 1 144 268, 1 244 172, 1 793 718 und 1 804 017).

Nach dem Verfahren der DE-OS 3 325 268 kann dann aus dem cis,cis-Cyclooctadien-(1,5) ein Isomerengemisch mit bis zu 97 Gew.-% cis,cis-Cyclooctadien-(1,3) und bis nahezu 30 Gew.-% cis,cis-Cyclooctadien-(1,4) hergestellt werden, aus dem sich durch destillative Trennung auch das bisher nur schwer zugängliche cis,cis-Cyclooctadien-(1,4) mit einem Reinheitsgrad bis zu 99 Gew.-% gewinnen lässt.

Was die ringöffnende Polymerisation der einzelnen bei den erfindungsgemässen Polyalkenameren als Ausgangsmaterial dienenden Cyclooctadienisomeren anbetrifft, so war dies für das cis,cis-Cyclooctadien-(1,5) seit langem bekannt. Von cis,cis-Cyclooctadien-(1,3) wusste man allerdings nur, dass es mit einem Katalysator auf der Basis Wolframhexachlorid/Diethylaluminiumchlorid/Epichlorhydrin in 40- bis 50%iger Ausbeute zu einem schnell vernetzenden Polymeren umgesetzt werden kann, das sich wegen der Vernetzung nicht mehr weiter charakterisieren lässt [Y.V. Korshak, J. Mol. Catal. 15, 207 (1982)]. Schliesslich ist in der bereits zitierten Monographie «Olefin Metathesis» von K.J. Ivin bezüglich cis,cis-Cyclooctadien-(1,4) erwähnt, dass es bisher nicht gelungen sei, dieses Monomere ringöffnend zu polymerisieren [A.J. Amass et al., Eur. Pol. J. 12, 93 (1976)].

Weiterhin war bekannt, dass bei der Polymerisation von cis,cis-Cyclooctadien-(1,5) zwar das erwartete alternierende Copolymer von Cyclobuten (bzw. Butadien) und Cyclohexen zunächst entsteht, dann aber zu Polybutenamer (= 1,4-Polybutadien) und Cyclohexen zerfällt [Hocks et al., J. Pol. Sci. Pol. Lett. 13, 391 (1975)].

Bei diesem Wissensstand war es nicht zu erwarten, dass Cyclooctadienisomerengemische, die neben cis,cis-Cyclooctadien-(1,5) bis zu 20 Gew.-% cis,cis-Cyclooctadien-(1,3) und 10 bis 99 Gew.-% cis,cis-Cyclooctadien-(1,4) enthalten, ringöffnend polymerisiert werden können, ohne dass die vorstehend erwähnten Komplikationen (minimale Ausbeuten, Sechsringabspaltungen) auftreten.

Es ist besonders überraschend, dass die aus dem cis,cis-Cyclooctadien-(1,4) gebildeten Polymeren ihre =CH-CH$_2$-CH= -Einheiten nicht als Cyclohexadien-(1,4) abspalten, obwohl das eigentlich vom Verhalten der Linol- und Linolensäureester unter Metathesebedingungen zu erwarten war (C. Boelhouver und E. Verkuijlen, Chem. Comm. 1974, 793).

Bemerkenswerterweise wird ausserdem die ringöffnende Polymerisation von cis,cis-Cyclooctadien-(1,4) und -(1,5) durch die Anwesenheit des 1,3-Isomeren längst nicht so stark inhibiert wie etwa die des Cyclooctens.

Die erfindungsgemässen Polyalkenameren können nach allen Verfahren des Standes der Technik, die die ringöffnende Polymerisation von cyclischen Olefinen mit mindestens einer nicht substituierten Doppelbindung betreffen, hergestellt werden (DE-OSS 1 570 940, 1 645 038, 1 720 798, 1 720 820, 1 770 143 und 1 805 158, DE-AS 1 299 868, GB-PSS 1 124 456, 1 194 013 und 1 182 975). Die zu dieser ringöffnenden Polymerisation verwendeten Katalysatoren enthalten bekanntlich Verbindungen von Metallen der 5. bis 7. Nebengruppe des Periodischen Systems der Elemente (PSE), vornehmlich des Niobs, Tantals, Molybdäns, Wolframs und Rheniums sowie Metalle der 1. bis 4. Hauptgruppe des PSE bzw. deren Alkyle oder Hydride, gegebenenfalls mit weiteren Liganden, wie z.B. Halogen, Alkoxyl oder Carboxylat, oder an ihrer Stelle Lewis-Säuren. Ausserdem können diese auch als Metathesekatalysatoren bezeichneten Katalysatorsysteme weitere aktivierende Zusätze wie z.B. Alkohole, Epoxide, Hydroperoxide, Vinyl- und Allylether und -ester, Vinylhalogenide und aromatische Nitroverbindungen enthalten.

Die Umsetzung kann in allen Lösemitteln durchgeführt werden, welche als geeignet bei der Polymerisation mit Hilfe von Ziegler-Natta-Katalysatoren bekannt sind. Die wichtigsten Vertreter aus der Gruppe der aliphatischen, alicyclischen, aromatischen und halogenierten Kohlenwasserstoffe sind folgende: Pentan, Hexan, Heptan, n- und iso-Octan, Isononan (hydriertes Trimerpropen), n-Decan, Isododecan (hydriertes Tetramerpropen), Cyclopentan, Cyclohexan, Methylcyclopentan, Methylcyclohexan, Ethylcyclohexan, Isopropylcyclohexan, Cyclooctan, Decahydronaphthalin, hydrierte Terpene wie Pinan und Camphan, Cyclohexen und seine Substitutionsprodukte, Benzol, Toluol, -o-, m-, p-Xylol, Ethylbenzol, o-, m-, p-Diethylbenzol, n-Propylbenzol, Isopropylbenzol und andere Mono- bis Polyalkylbenzole, Tetrahydro-naphthalin, Methylenchlorid, Chloroform, Tetrachlorkohlenstoff, 1,2-Dichlorethylen, Trichlorethylen, Tetrachlorethylen, Chlorbenzol, o-Dichlorbenzol, Trichlorbenzol (Isomerengemisch), Brombenzol, Fluorbenzol, 1,2-Dichlorethan.

Wesentlich ist, dass die Lösungsmittel durch geeignete Reinigung möglichst frei von Wasser und anderen H-aciden Verbindungen sowie Verbindungen mit Donatorfunktionen (Lewis-Basen) eingesetzt werden. Ausser sehr kleinen Mengen, die gegebenenfalls zur Erzielung bestimmter Effekte zugesetzt werden, beeinträchtigen solche Verunreinigungen im allgemeinen die Aktivität des Katalysators.

Das erfindungsgemässe Verfahren wird bei Temperaturen zwischen –50 und +80°C durchgeführt. Die Reaktionstemperatur wird hierbei nach oben durch die thermische Stabilität des Katalysators und nach unten durch die zu weit herabgesetzte Reaktionsgeschwindigkeit begrenzt. Vorteilhaft arbeitet man bei Temperaturen zwischen –30 und +60°C, vorzugsweise aber im Bereich zwischen 0 und +5°C, der besonders leicht realisierbar ist.

Die erfindungsgemässen Polyalkenameren sind aufgrund ihres Molekulargewichtes leichtfliessende bis hochviskose Flüssigkeiten. Um sie zu erhalten, ist es erforderlich, dem Polymerisationsansatz sogenannte Regler, das sind gegebenenfalls substituierte offenkettige Olefine mit 2 bis 30 Kohlenstoffatomen, zuzugeben (DE-OS 2 922 335 und DE-PSS 1 919 047, 1 945 358, 2 027 905, 2 028 716, 2 028 935, 2 105 161 und 2 157 405). Die Menge des zugesetzten Reglers richtet sich nach dem gewünschten Molekulargewicht des Polyalkenameren und beträgt im allgemeinen 1 bis 20, vorzugsweise 3 bis 12 Molprozent, bezogen auf die Summe der erfindungsgemässen Cyclooctadienisomeren.

Im allgemeinen geht man bei der Herstellung der erfindungsgemässen Polyalkenameren so vor, dass man die Cyclooctadienisomeren mit dem Regler im Lösemittel vorlegt, die einzelnen Katalysatorkomponenten zugibt und die Polymerisation unter Rühren und gegebenenfalls Abführung von Reaktionswärme durchführt. Selbstverständlich kann die Polymerisation auch in Teilschritten durchgeführt werden, d.h., Monomere, Regler und Katalysatorkomponenten können mehrfach nachdosiert werden.

Wenn der erwünschte oder erreichbare Umsatz sich eingestellt hat, desaktiviert man den Katalysator durch Zugabe eines Alkohls, wie z.B. Methanol, oder einer anderen H-aciden Verbindung. Dann wäscht man die polymerhaltige Phase mit einer wässrigen, wässrig-alkoholischen oder alkoholischen Lösung von Mitteln, welche lösend auf die zunächst als Alkoholate oder Verbindungen der H-aciden Substanzen vorliegenden Katalysatorreste wirken. Solche lösend wirkenden Substanzen sind z.B. Säuren, Laugen oder Komplexbildner, wie Citronen- oder Weinsäure, methanolische Kalilauge, Acetylaceton, Ethylendiamintetraessigsäure und Nitrilotriessigsäure. Hierauf trennt man die Polymeren durch Ausfällen, z.B. Eingiessen in ein Fällungsmittel wie z.B. Methanol oder Isopropanol, oder Abdestillieren des Lösemittels, z.B. durch Einblasen von Wasserdampf oder Eindüsen der Polymerlösung in heisses Wasser, ab.

Zum Schutz gegen Oxidation, Vergelung und andere Alterungserscheinungen kann man den erfindungsgemässen Polyalkenameren in verschiedenen Stufen der Aufarbeitung Stabilisatoren, z.B. aus der Klasse der aromatischen Amine oder der sterisch gehinderten Phenole, beimengen. Ebenso kann man eventuell eine weitere Reinigung der Polymeren durch Umfällen durchführen. Nach diesen Operationen werden die Polymeren in bekannter Weise, z.B. im Vakuumtrockenschrank oder am Rotationsverdampfer, getrocknet.

Die erfindungsgemässen Polyalkenameren eignen sich, wie bereits vorher erwähnt, besonders nach vorheriger Isomerisierung, z.B. nach dem Verfahren der DE-OS 3 003 894, gut als Bindemittel in Anstrichmitteln. Sie können dabei im Rahmen ihrer Verträglichkeit in dem Masse mit anderen Bindemitteln, z.B. den isomerisierten niedermolekularen Polybutadienen, die nach dem Verfahren der EP-A-0 086 894 erhalten werden, verschnitten werden, dass die guten lacktechnischen Eigenschaften zur Geltung kommen.

Die vorliegende Erfindung wird durch die nachfolgenden Beispiele näher erläutert. Darin werden die nachfolgenden Begriffe durch die nebenstehenden Abkürzungen beschrieben:

cis,cis-Cyclooctadien = COD
Ethyl = Et
Isobutyl = iBu
Allyltribromphenylether = ATBPE
Doppelbindung(en) = DB
Jodzahl [g Jod/100 g Substanz] = JZ
Zahlenmittleres Molekulargewicht (dampfdruckosmometrisch bestimmt) = $\overline{M}_n$

Infrarot = IR
Ultraviolett = UV
Kernmagnetische Resonanz = NMR

*Beispiel 1*

In einem 6-l-Glasreaktor mit Planschliffdeckel, versehen mit Rührer, Thermofühler, Tropftrichter sowie Schutzgaszu- und -ableitung, wurden unter trockenem Argon 3 l Hexan und die Teilmenge von 250 g eines Gemisches aus 376 g COD-1,4 (49,2 Gew.-%), 376 g COD-1,5 (49,2 Gew.-%), 12 g COD-1,3 (1,6 Gew.-%) und 59 g Octen-1 mit

10 mMol WCl6 (in Form einer 0,1molaren Lösung in Chlorbenzol),
10 mMol EtOH (in Form einer 0,1molaren Lösung in Chlorbenzol),
10 mMol ATBPE (in Form einer 0,1molaren Lösung in Chlorbenzol) und
70 mMol EtAlCl2 (in Form einer 1molaren Lösung in Chlorbenzol)

versetzt und bei äusserer Kühlung der Rest des Monomer/Regler-Gemisches innerhalb von 10 Minuten der Reaktionsmischung durch den Tropftrichter zugesetzt, wobei die Temperatur von 20°C auf 46°C anstieg. Zur Reaktionsmischung wurde danach nochmals die gleiche Katalysatormenge gegeben, 15 Minuten polymerisiert und die Reaktion mit einer Lösung von 30 g Kaliumhydroxid in 300 ml Methanol gestoppt. Das Polymere wurde in 6 l Methanol ausgefällt, zweimal mit je 4 l Methanol gewaschen, in 2 l Toluol gelöst, unlösliche Anteile abfiltriert, in 4 l Methanol ausgefällt, mit 2 l Methanol gewaschen und bei 70°C im Vakuum getrocknet.

Es resultierten 522 g eines Öls mit folgenden Kenngrössen:
DB-Konfiguration [% trans/vinyl/cis] durch IR-Analyse: 67/4/29
DB-Stellung [% 1,4/1,5 und entfernter/vinyl] durch NMR-Bestimmung: 54/42/4
JZ: 392
$M_n$: 2 050

*Beispiel 2*

In einem 2-l-Glasreaktor, der wie der im Beispiel 1 beschriebene 6-l-Glasreaktor ausgestattet war, wurden 54 g COD-1,4 (45,5 Gew.-%), 54 g COD-1,5 (45,5 Gew.-%), 10,8 g COD-1,3 (9 Gew.-%) und 11,2 g Octen-1 in 500 ml Hexan mit

3 mMol WCl6 (in Form einer 0,1molaren Lösung in Chlorbenzol),
3 mMol EtOH (in Form einer 0,1molaren Lösung in Chlorbenzol),
3 mMol ATBPE (in Form einer 0,1molaren Lösung in Chlorbenzol) und
21 mMol EtAlCl2 (in Form einer 1molaren Lösung in Chlorbenzol)

versetzt und die Mischung 15 Minuten unter Rühren polymerisiert, wobei die Temperatur von 21°C auf 40°C anstieg. Danach wurde die Polymerisation durch Zusatz einer Lösung von 4 g Kaliumhydroxid in 100 ml Methanol gestoppt. Das Polymere wurde in 1 l Methanol ausgefällt, mit 1 l Methanol gewaschen, in 500 ml Toluol gelöst, eine geringe Menge unlösliches Material abfiltriert und das Produkt wie oben beschrieben erneut gefällt und unter Rühren gewaschen. Nach Entfernen der flüchtigen Anteile im Vakuum am Rotationsverdampfer bei 70°C wurden 78 g eines Öls mit folgenden Kenngrössen erhalten:
DB-Konfiguration [% trans/vinyl/cis] durch IR-Analyse bestimmt 64/4/32
DB-Stellung [% 1,4/1,5 und entfernter/1,3/vinyl] durch NMR-Analyse bestimmt: 56/35/5/4
$M_n$: 1 480

*Beispiel 3*

In dem 2-l-Glasreaktor des Beispiels 2 wurden zu 100 ml Chlorbenzol zunächst

0,5 mMol WCl6 (in Form einer 0,1molaren Lösung in Chlorbenzol),
0,5 mMol EtOH (in Form einer 0,1molaren Lösung in Chlorbenzol),
0,5 mMol ATBPE (in Form einer 0,1molaren Lösung in Chlorbenzol) und
3,5 mMol iBuAlCl2 (in Form einer 1molaren Lösung in Chlorbenzol)

gegeben, sodann eine Mischung aus 10,8 g COD-1,4 (20 Gew.-%), 35,1 g COD-1,5 (65 Gew.-%), 8,1 g COD-1,3 (5 Gew.-%) und 2,8 g Octen-1 zugeführt. Der Ansatz wurde 20 Minuten unter Rühren polymerisiert, wobei die Temperatur von 23°C auf 42°C anstieg. Danach wurden 2 g Kaliumhydroxid in 50 ml Methanol zugesetzt, das Polymere durch Zusatz von 1 l Methanol gefällt, das gefällte Produkt mit 500 ml Methanol, anschliessend in 250 ml Hexan gelöst, eine geringe Menge unlösliches Material abfiltriert und das Hexan im Vakuum am Rotationsverdampfer bei 80°C entfernt. Es wurden 31 g eines Öls mit den nachfolgenden Kenndaten erhalten:
DB-Konfiguration [% trans/vinyl/cis] durch IR-Analyse bestimmt: 67/1/32
DB-Stellung [% 1,4/1,5 und entfernter/1,3/vinyl] durch NMR-Analyse bestimmt: 36/53/9/2
$M_n$: 1 870

*Beispiel 4*

a) Isomerisierung eines erfindungsgemässen Polyalkenameren

In einen 3-Halskolben mit einem Fassungsvermögen von 2 l, der mit Rückflusskühler und Thermometer ausgerüstet war, wurden unter Schutzgasatmosphäre (Stickstoff) 750 g eines Copolymerisats mit den nachfolgenden Kenngrössen, das aus gleichen Teilen COD-1,4 und -1,5 (49,2 Gew.-%) sowie 1,6 Gew.-% COD-1,3 hergestellt worden war, zusammen mit 750 g trockenem Toluol gegeben:
DB-Konfiguration [% trans/vinyl/cis] durch IR-Analyse bestimmt: 67/4/29
DB-Stellung [1,4/1,5 und entfernter/vinyl] durch NMR-Analyse bestimmt: 58/38/4
Konjugierte DB [als % Octadien] durch UV-Analyse bestimmt 1,1
JZ: 377
$M_n$: 1 850

Nach Aufheizen auf 80°C wurde mit dem Katalysator gemäss Beispiel 6 der DE-OD 3 003 894 isomerisiert, indem der Ansatz 30 Minuten bei 80°C gerührt wurde. Da die Reaktion leicht exotherm war, musste zeitweise gekühlt werden. Anschliessend wurde die Mischung schnell auf Raumtemperatur (20°C) abgekühlt und die unlöslichen Teile durch Filtration unter Druck abgetrennt. Nach Entfernen der Lösemittel am Rotationsverdampfer im Ölpumpenvakuum wurden 675 g eines viskosen, bräunlichen Öls mit folgenden analytischen Kenngrössen erhalten:

DB-Konfiguration [% trans/vinyl/cis] durch IR-Analyse bestimmt: 69/3/28

DB-Stellung [% 1,3/1,4/1,5 und entfernter/vinyl] durch NMR-Analyse bestimmt: 44/-/53/3

Konjugierte DB [als % Octadien/-trien/-tetraen] durch UV-Analyse bestimmt: 21/1,6/0,48

JZ: 337

$\overline{M}_n$: 1 870

b) Prüfung der lufttrocknenden Eigenschaften

Die Proben wurden mit einem Ziehrahmen in der in der Tabelle angegebenen Schichtdicke auf Glasplatten aufgebracht und waagerecht im Klima 23/50 nach DIN 50 014, Beleuchtung: Osram-Tageslichtlampe, gelagert. Sikkativierung: 0,04% Co. Es bedeuten in der nachfolgenden Tabelle:

ST = Staubtrockenzeit, Trockenstufe 1, DIN 53 150, in Stunden (h)

DT = Durchtrockenzeit in Stunden (h), gemessen nach DEF 1053, Methode 8, Belastung 2,27 kg

## TABELLE

| Versuch Nr. | Art des Bindemittels | Besondere Kennzeichen des Bindemittels | Filmdicke (µm) | ST (h) | DT (h) |
|---|---|---|---|---|---|
| 1 | Erfindungsgemässes Polyalkenamer | Gemäss Beispiel 4 a) | 50 | 1 | 3,5 |
| 2 | Isomerisiertes Polybutadienöl | Gemäss Beispiel 6 der DE-OS 3 003 894 | 50 | 2,5 | 4,5 |
| 3 | Holzöl (Tungöl) | Entsprechend DIN 55 936 | 50 | 3 | 9 - 16 |
| 4 | Polybutadienöl | $\overline{M}_n$ = 1700; DB: % trans/vinyl/cis = 27/1/72 | 50 | 4 | 4,5 |
| 5 | Polyalkenamer wie bei Versuch Nr. 1 | Gemäss Beispiel 4 a) | 100 | 1,5 | 9 - 16 |
| 6 | Holzöl wie bei Versuch Nr. 3 | Entsprechend DIN 55 936 | 100 | Runzelbildung | |

## Patentansprüche

1. Niedermolekulare Polyalkenamere mit einem mittleren Molekulargewicht ($\overline{M}_n$) von 500 bis 6000, hergestellt durch ringöffnende Polymerisation eines Cyclooctadienisomerengemisches, das neben cis,-cis-Cyclooctadien-(1,5) maximal 20 Gew.-% cis,cis-Cyclooctadien-(1,3) und 10 bis 99 Gew.-% cis,cis-Cyclooctadien-(1,4) enthält.

2. Polyalkenamere nach Anspruch 1, dadurch gekennzeichnet, dass das eingesetzte Cyclooctadienisomerengemisch 20 bis 99 Gew.-% cis,cis-Cyclooctadien-(1,4) enthält.

3. Polyalkenamere nach den Ansprüchen 1 und 2, dadurch gekennzeichnet, dass das eingesetzte Cyclooctadienisomerengemisch 0,01 bis 20 Gew.-% cis,cis-Cyclooctadien-(1,3) enthält.

4. Polyalkenamere nach Anspruch 3, dadurch gekennzeichnet, dass das eingesetzte Cyclooctadienisomerengemisch 0,1 bis 10 Gew.-% cis,cis-Cyclooctadien-(1,3) enthält.

5. Verwendung der Polyalkenameren gemäss den Ansprüchen 1 bis 4, gegebenenfalls nach einer Isomerisierung, als Bindemittel in Überzugsmitteln.

## Claims

1. A low-molecular-weight polyalkenamer having a mean molecular weight ($\overline{M}_n$) of 500 to 6,000, produced by ring-opening polymerization of a cyclooctadiene isomer mixture containing, in addition to cis,cis-cycloocta-1,5-diene, a maximum of 20% by weight of cis,cis-cycloocta-1,3-diene and 10 to 99% by weight of cis,cis-cycloocta-1,4-diene.

2. A polyalkenamer according to claim 1, characterized in that the cyclooctadiene isomer mixture employed contains 20 to 99% by weight of cis,cis-cycloocta-1,4-diene.

3. A polyalkenamer according to any of claims 1 and 2, characterized in that the cyclooctadiene isomer mixture employed contains 0.01 to 20% by weight of cis,cis-cycloocta-1,3-diene.

4. A polyalkenamer according to claim 3, characterized in that the cyclooctadiene isomer mixture employed contains 0.1 to 10% by weight of cis,cis-cycloocta-1,3-diene.

5. The use of a polyalkenamer according to any of claims 1 to 4, if appropriate after isomerization, as a binder in a coating agent.

## Revendications

1. Poly-alcénamères de bas boids moléculaire, d'un poids moléculaire moyen ($\overline{M}_n$) de 500 à 6000, préparés par polymérisation décyclisante d'un mélange d'isomères du cyclo-octadiène qui, à côté de cis,cis-cyclo-octadiène-(1,5), renferme au maximum 20% en poids de cis,cis-cyclo-octadiène-(1,3) et de 10 à 99% en poids de cis,cis-cyclo-octadiène-(1,4).

2. Poly-alcénamères selon la revendication 1, caractérisés par le fait que le mélange d'isomères de cyclo-octadiène qui est utilisé renferme de 20 à 99% en poids de cis,cis-cyclo-octadiène-(1,4).

3. Poly-alcénamères selon les revendications 1 et 2, caractérisés par le fait que le mélange d'isomères de cyclo-octadiène qui est utilisé renferme de 0,01 à 20% en poids de cis,cis-cyclo-octadiène-(1,3).

4. Poly-alcénamères selon la revendication 3, caractérisés par le fait que le mélange d'isomères de cyclo-octadiène qui est utilisé renferme de 0,1 à 10% en poids de cis,cis-cyclo-octadiène-(1,3).

5. L'utilisation des poly-alcénamères selon les revendications 1 à 4, éventuellement après une isomèrisation, en tant que liant dans des agents de revêtement.